# EUROPEAN PATENT APPLICATION

(11) **EP 4 571 620 A1**
(43) Date of publication of application: **18.06.2025**
(21) Application number: 23307231.3
(22) Date of filing: 15.12.2023
(51) Int. Cl.: G06Q 20/20, G06K 19/07, G06K 19/073, G06Q 20/34, G06Q 20/40, G07F 7/08

(54) **METHOD FOR MANAGING A PAYMENT TRANSACTION**

(71) Applicant: THALES DIS FRANCE SAS, 92190 Meudon (FR)
(72) Inventor: SALLES, Jean-Luc, 13720 La Bouilladisse (FR); FAVREAU, Valentin, 92130 Issy-les-Moulineaux (FR); MARTINEZ, Frédéric, 13011 Marseille (FR); PALADJIAN, Pierre, 13190 Allauch (FR)
(74) Representative: Grevin, Emmanuel

(57) **Abstract**

The invention is a method for managing a payment transaction involving a payment instrument (10) assigned to a user (50) and including both a sensor (52) and a credit transfer application (17) comprising an internal key and a first reference of a first banking. The credit transfer application receives from a payment terminal a request command (70) to authorize a money transfer from the first banking account to a second banking account assigned to a merchant. The request command comprises a transfer amount and a second reference of the second banking account. Upon receipt of the request command, the payment instrument detects whether the sensor is activated by the user or not. Only if the sensor turns out to be activated, the credit transfer application computes a signature using both the transfer amount, the internal key and said first and second references and sends the signature to the payment terminal.

## Description

### (Field of the invention)

The present invention relates to methods for managing payment transactions. It relates particularly to methods of controlling execution of a payment transaction involving both a payment instrument and a payment terminal.

### (Background of the invention)

Payment transactions are done today through the interaction of a payment instrument with a connected payment terminal, and the exchange of a payload with a remote server. For example, the payment transaction may be a payment carried out via a Point-Of-Sale (POS) terminal. Such transactions are called in-person transactions (or proximity transactions or face-to-face transactions) because the cardholder is at the same location as the payment terminal.

Conventional payment terminals can communicate with a payment instrument through a contact communication protocol (e.g. payment instrument inserted in the reader of the payment terminal) or contactless communication protocol (e.g. payment instrument is placed in proximity to the reader of the payment terminal).

### (Summary of the Invention)

Interactions between a cardholder (i.e. user of the payment instrument) and a Point-Of-Sales (POS) terminal are very limited. In general, a customer can only interact with what is already programed on the POS terminal, like confirming a payment, typing in a PIN code or selecting payment installments in very rare cases.

Nowadays, there is an emerging need to offer the customer to easily select payment options at the time of the payment transaction. In particular, the customer may want to use a credit transfer instead of a conventional payment scheme like EMV^{®} transactions.

The invention aims at solving the above-mentioned technical problem.

An object of the present invention is a method for managing a payment transaction between a payment terminal allocated to a merchant and a payment instrument assigned to a user. The payment instrument includes a hardware sensor and a credit transfer application that comprises an internal key and a first reference of a first banking account assigned to the user.

The payment terminal selects the credit transfer application in the payment instrument. Then, the credit transfer application receives from the payment terminal a request command to authorize a money transfer from the first banking account to a second banking account assigned to said merchant. The request command comprises a transfer amount and a second reference of the second banking account.

Upon receipt of the request command, the payment instrument detects whether the sensor is activated by the user or not. Only if the sensor turns out to be activated, the credit transfer application computes a signature using both the transfer amount, the internal key and said first and second references, and sends said signature to the payment terminal in response to the request command. Otherwise, the payment instrument refuses the payment transaction.

Advantageously, the payment instrument may comprise a payment application able to conduct a payment transaction by running a Payment System Environment (PSE) or Proximity Payment System Environment (PPSE) mechanism compliant with EMV^{®} specifications. The payment application may be set as default payment application in the payment instrument. the payment instrument may comprise setting data specifying that, by default, the credit transfer application is not selectable by the payment terminal.

After the payment instrument is powered by the payment terminal and completes a boot sequence and before the full establishment of a communication session with the payment terminal, the payment instrument may detect whether the sensor is triggered by the user or not.

Only if the sensor turns out to be triggered, the payment instrument may update the setting data to make the credit transfer application selectable by the payment terminal as default payment application in the payment instrument, otherwise the payment instrument may leave the setting data unchanged.

The payment terminal may select the credit transfer application in the payment instrument after full establishment of said communication session.

Advantageously, the credit transfer application may comply with SEPA Instant Credit Transfer requirements.

Advantageously, the hardware sensor may be a push button, a capacitive button, a mechanical sensor, an optical sensor, an electrical sensor or a biometric sensor configured to detect a presence of a finger of the user.

Advantageously, the payment instrument may be a smart card, a ring, a keychain, or a bracelet.

Another object of the present invention is a payment instrument assigned to a user and able to manage a payment transaction with a payment terminal allocated to a merchant. The payment instrument includes a hardware sensor and a credit transfer application comprising an internal key and a first reference of a first banking account assigned to the user.

The credit transfer application is configured to receive from the payment terminal a request command to authorize a money transfer from the first banking account to a second banking account assigned to said merchant, said request command comprising a transfer amount and a second reference of the second banking account.

Upon receipt of the request command, the payment instrument is configured to detect whether the sensor is activated by the user or not. Only if the sensor turns out to be activated, the credit transfer application is configured to compute a signature using both the transfer amount, the internal key and said first and second references, and to send said signature to the payment terminal in response to the request command, otherwise the payment instrument is configured to refuse the payment transaction.

Advantageously, the payment instrument may comprise a payment application able to conduct a payment transaction by running a Payment System Environment (PSE) or Proximity Payment System Environment (PPSE) mechanism compliant with EMV^{®} specifications, said payment application being set as default payment application in the payment instrument. The payment instrument may comprise setting data specifying that, by default, the credit transfer application is not selectable by the payment terminal. After the payment instrument is powered by the payment terminal and completes a boot sequence and before the full establishment of a communication session with the payment terminal, the payment instrument may be configured to detect whether the sensor is activated by the user or not. Only if the sensor turns out to be activated, the payment instrument may be configured to update the setting data to make the credit transfer application selectable by the payment terminal as default payment application in the payment instrument. Otherwise, the payment instrument may be configured to leave the setting data unchanged.

Advantageously, the credit transfer application may comply with SEPA Instant Credit Transfer requirements.

Advantageously, the hardware sensor may be a push button, a capacitive button, a mechanical sensor, an optical sensor, an electrical sensor or a biometric sensor configured to detect a presence of a finger of the user.

Advantageously, the payment instrument may be a smart card, a ring, a keychain, or a bracelet.

Another object of the present invention is a system comprising a payment instrument according to the invention and a payment terminal comprising a point-of-sale application. The payment terminal is allocated to a merchant. The credit transfer application comprises a first reference of a first banking account assigned to the user. The point-of-sale application is configured to send a select command to the payment instrument in order to select the credit transfer application in the payment instrument after full establishment of a communication session between the payment terminal and the payment instrument. The point-of-sale application is configured to send the request command to authorize a money transfer from the first banking account to the second banking account assigned to said merchant and to get the signature from the payment instrument in response to the request command. The point-of-sale application is configured to send a transfer request to a remote server assigned to a bank with which the first banking account is opened, the transfer request comprising said signature.

Advantageously, both the credit transfer application and the point-of-sale application comply with SEPA Instant Credit Transfer requirements.

### (Brief description of the drawings)

Other characteristics and advantages of the present invention will emerge more clearly from reading the following description of a number of preferred embodiments of the invention with reference to the corresponding accompanying drawings in which:
- Figure 1 shows a first exemplary flow diagram for managing a payment transaction according to a first example of the invention;
- Figure 2 shows a second exemplary flow diagram for managing a payment transaction according to a second example of the invention; and
- Figure 3 shows a diagram of architecture of a system for managing a payment transaction according to an example of the invention.

### (Detailed description of the preferred embodiments)

The invention may apply to any type of payment instrument usually associated to a user (also called cardholder). The payment instrument may be implemented in a wide variety of form factors such as physical smart card, smartwatch, or wearable device for instance.

Conventional payment smart cards are designed to fully establish a communication session with the reader of a payment terminal as soon as they detect they are powered by the reader. For instance, as soon as they are powered by a electromagnetic field, conventional contactless smart cards automatically perform with the contactless reader a handshake and anti-collision procedure in a time short enough to go unnoticed by the user, in order to offer the possibility of starting an application transaction (such as a payment transaction) as quickly as possible.

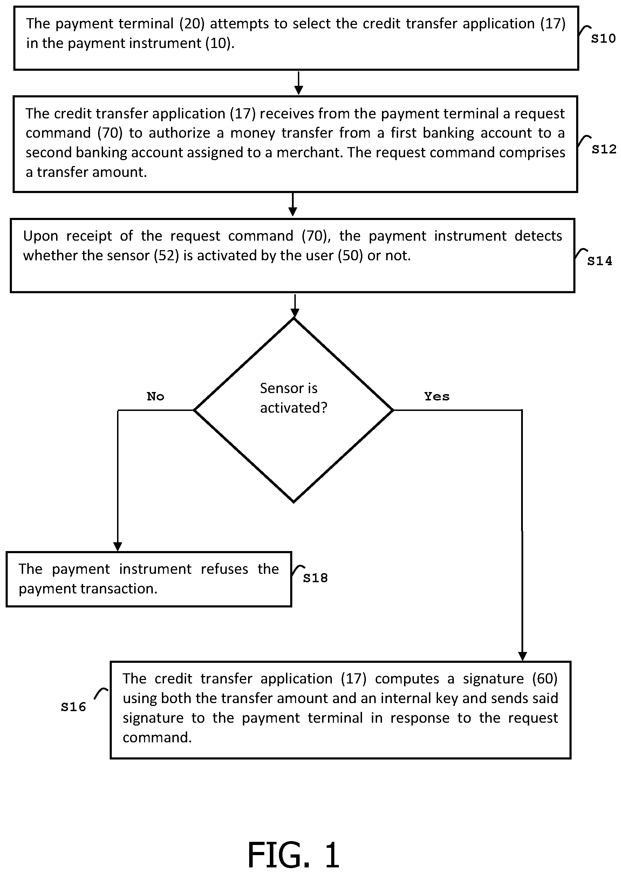

Figure 1 shows an exemplary flow diagram for managing a payment transaction according to an example of the invention.

In this example, the payment instrument 10 is a physical banking card intended to be used by its associated genuine user 50 (i.e. bank customer or cardholder) for payment transactions or cash withdrawals.

The payment instrument 10 embeds a secure element comprising a hardware processing unit, a memory storing an operating system, at least one conventional banking application 16 designed to contribute to payment services and a credit transfer application 17 separate from the conventional banking application 16.

The payment instrument 10 can be a proximity card comprising a contactless unit able to communicate through a contactless protocol as defined by the ISO 14443 standard or Near Field Communications (NFC) standards for instance.

The payment instrument can be configured to communicate through a contact communication protocol in addition to the contactless communication protocol.

The payment instrument 10 comprises a hardware sensor 52 which can be a button or a fingerprint sensor for instance.

A payment terminal 20 is allocated to a merchant while the payment instrument 10 is assigned to a user 50.

The credit transfer application 17 comprises an internal key and a first reference of a first banking account assigned to the user. The first reference can be an International Bank Account Number (IBAN) or any proprietary banking reference upon context.

The payment terminal attempts to select the credit transfer application 17 in the payment instrument (step S10). The payment terminal can comprise default settings that cause the payment terminal to automatically try to select the credit transfer application 17 once a communication session is established with the payment instrument. Alternatively, the merchant can activate a specific feature of the payment terminal before the transaction starts so that the payment terminal attempts to select the credit transfer application 17 once a communication session is established with a payment instrument.

Then, the credit transfer application 17 receives (step S12) a request command 70 from the payment terminal. The request command 70 requests authorization to transfer a specific money amount from the first banking account to a second banking account assigned to the merchant. The request command comprises a transfer amount and a second reference of the second banking account.

Upon receipt of the request command 70, the payment instrument detects (step S14) whether the sensor is activated by the user or not.

Only if the sensor turns out to be activated, the credit transfer application 17 computes (step S16) a signature 60 using both the transfer amount, the internal key and said first and second references, then sends said signature to the payment terminal in response to the request command. The signature 60 reflects the authorization of the payment instrument to pursue the payment transaction.

Otherwise, the payment instrument refuses (step S18) the payment transaction. In the latter case, the payment instrument can either not respond to the payment terminal or send a result whose value reflects a refusal of the transaction.

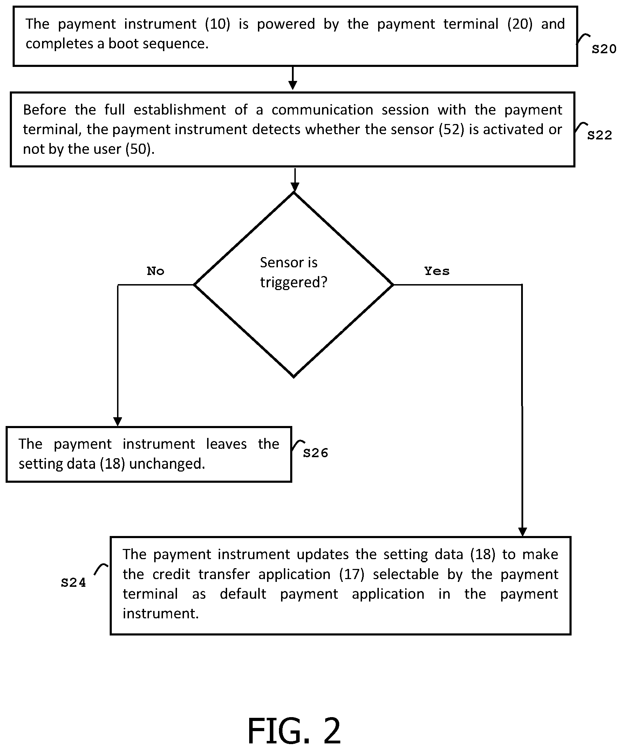

As shown at Figure 2, in some embodiments, the hardware sensor 52 can be used to voluntarily enable the credit transfer application 17 in the payment instrument at the time of the transaction.

The conventional payment application 16 can be able to conduct a payment transaction by running a Payment System Environment (PSE) or Proximity Payment System Environment (PPSE) mechanism compliant with EMV^{®} specifications. The payment application 16 can be set as default payment application in the payment instrument.

The payment instrument can comprise setting data 18 specifying that, by default, the credit transfer application is not selectable by the payment terminal.

After the payment instrument is powered by the payment terminal and completes a boot sequence (step S20) and before the full establishment of a communication session with the payment terminal, the payment instrument can detect (step S22) whether the sensor is triggered by the user or not.

Only if the sensor turns out to be triggered, the payment instrument can update the setting data 18 to make the credit transfer application 17 selectable by the payment terminal as default payment application in the payment instrument (step S24). Otherwise, the payment instrument can leave the setting data 18 unchanged (step S26) so that only the payment application 16 could be selected by the payment terminal.

The payment terminal can attempt to select the credit transfer application 17 in the payment instrument after the full establishment of the communication session between the payment terminal and the payment instrument.

In some embodiments, the credit transfer application 17 can comply with requirements of Single Euro Payments Area (SEPA) Instant Credit Transfer (SCT Inst), SEPA Direct Debit (SDD) or any specific credit transfer system.

In some embodiments, the hardware sensor can be a push button, a capacitive button, a mechanical sensor, an optical sensor, an electrical sensor.

In some embodiments, the hardware sensor can be a biometric sensor configured to detect the presence of a finger of the user and to the payment instrument can be configured to consider the sensor is activated when the biometric sensor detects the presence of a finger.

In some embodiments, the payment instrument can be a physical smart card, a payment ring, a payment keychain, or a payment bracelet for instance.

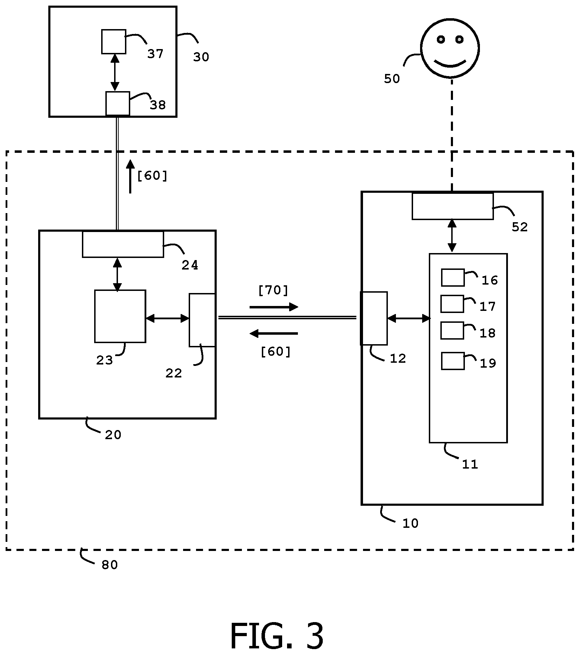

Figure 3 shows a diagram of architecture of a system 80 for managing payment transactions according to an example of the invention.

In this example, the system 80 is a payment system comprising both a payment instrument 10 assigned to a user 50 and a Payment terminal 20. The payment instrument 10 is a smart card having a secure element 11 including both a hardware processor and a non-volatile memory.

The smart card 10 comprises a physical communication interface 12 able to exchange data with the payment terminal 20 through a contact or contactless channel.

The payment terminal 20 may be a conventional Point-Of-Sale (POS) terminal. It comprises a hardware processor (not shown), a banking application 23 able to manage payment transactions, and a physical communication interface 22 adapted to exchange data with the payment instrument 10 in contact or contactless mode. For instance, the communication interface 22 may be adapted to exchange data through a communication session compliant with ISO/IEC-14443 standard or Near Field Communications (NFC) specifications. Alternatively, the communication interface 22 may be adapted to exchange data through a communication session compliant with ISO/IEC-7816 standards.

The payment terminal 20 comprises a second physical communication interface 24 adapted to exchange data with a remote bank server 30. The payment terminal 20 and the remote bank server 30 may exchange messages through usual protocols and networks.

The payment instrument comprises a hardware sensor 52 and the secure element 11 comprise a first set 18 of program instructions designed to monitor the hardware sensor 52.

The hardware sensor 52 can be a push button, a capacitive button, a mechanical sensor, an optical sensor or an electrical sensor. In some embodiments, the hardware sensor 52 can be a biometric sensor like a fingerprint scanner.

The secure element 11 includes a credit transfer application 17 comprising an internal key and a first reference (e.g. IBAN) of a first banking account assigned to the user 50.

The credit transfer application 17 is designed to receive from the payment terminal a request command 70 to authorize a money transfer from the first banking account to a second banking account assigned to the merchant. The request command comprises a transfer amount and a second reference of the second banking account.

The secure element 11 comprises a set 19 of program instructions designed to detect whether the hardware sensor is currently activated or not upon receipt of the request command 70.

Only if the sensor turns out to be activated, the credit transfer application 17 is configured to compute a signature 60 using both the transfer amount, the internal key and the first and second references of banking accounts. In this case, the value of the computed signature reflects the agreement to pursue the pending payment transaction. The credit transfer application 17 is configured to send the generated signature 60 to the payment terminal in response to the request command.

Only if the sensor turns out not to be activated, the payment instrument is configured to refuse the payment transaction.

In some embodiments, the payment instrument can comprise a payment application 16 able to conduct a payment transaction by running a Payment System Environment (PSE) or Proximity Payment System Environment (PPSE) mechanism compliant with EMV^{®} specifications. The payment application can be set as default payment application in the payment instrument.

The payment instrument can comprise setting data 18 specifying that, by default, the credit transfer application is not selectable by the payment terminal.

After the payment instrument is powered by the payment terminal and completes a boot sequence and before the full establishment of a communication session with the payment terminal, the payment instrument can be configured to detect whether the sensor is activated by the user or not. Only if the sensor turns out to be activated, the payment instrument can be configured to update the setting data 18 to make the credit transfer application 17 selectable by the payment terminal as default payment application in the payment instrument. Otherwise, the payment instrument can be configured to leave the setting data 18 unchanged.

In some embodiments, the payment terminal comprises a point-of-sale application 23 which is configured to send a select command to the payment instrument in order to select the credit transfer application 17 in the payment instrument after full establishment of a communication session between the payment terminal and the payment instrument.

The point-of-sale application 23 can be configured to send the request command 70 to request authorization of a money transfer from the first banking account to the second banking account assigned to said merchant and to get the signature 60 from the payment instrument in response to the request command.

The point-of-sale application 23 can be configured to send a transfer request to a remote server 30 assigned to a bank with which the first banking account is opened, the transfer request comprising the signature generated by the payment instrument.

The remote server 30 can comprise a bank application 37 configured to check if the signature 60 is authentic by checking it was generated using the internal key assigned to the credit transfer application 17 installed in the payment instrument 10. The remote server 30 comprises a physical communication interface 38 adapted to exchange data with the payment terminal 20.

The invention is not limited to the described embodiments or examples. In particular, the described examples and embodiments may be combined.

The invention is not limited to Banking smart cards and applies to any payment instruments able to participate to a payment transaction.

Thanks to some embodiments of the invention, during a payment transaction performed with a payment terminal, the cardholder of the payment instrument can activate a sensor embedded in the payment instrument to authorize the payment in the form of a credit transfer instead of a conventional payment. In particular, the credit transfer can be an instant credit transfer triggered by the bank that issued the payment instrument provided that the signature generated by the payment instrument is valid.

Thanks to some embodiments of the invention, during a payment transaction performed with a payment terminal, the user of the payment instrument can activate the Credit Transfer feature in the payment instrument in a simple and practical way on-the-fly before the payment transaction starts.

Thanks to some embodiments of the invention, the duration of the whole payment transaction remains reasonable for the user and easy to perform.

## Claims

1. A method for managing a payment transaction between a payment terminal (20) allocated to a merchant and a payment instrument (10) assigned to a user (50),
wherein the payment instrument includes a hardware sensor (52) and a credit transfer application (17) comprising an internal key and a first reference of a first banking account assigned to the user,
wherein the payment terminal selects the credit transfer application (17) in the payment instrument (S10),
wherein the credit transfer application (17) receives (S12) from the payment terminal a request command (70) to authorize a money transfer from the first banking account to a second banking account assigned to said merchant, said request command comprising a transfer amount and a second reference of the second banking account, and
wherein upon receipt of the request command (70), the payment instrument detects (S14) whether the sensor is activated by the user or not, and
wherein, only if the sensor turns out to be activated, the credit transfer application (17) computes (S16) a signature (60) using both the transfer amount, the internal key and said first and second references, and sends said signature to the payment terminal in response to the request command, otherwise the payment instrument refuses (S18) the payment transaction.

2. The method according to claim 1, wherein the payment instrument comprises a payment application (16) able to conduct a payment transaction by running a Payment System Environment (PSE) or Proximity Payment System Environment (PPSE) mechanism compliant with EMV^{®} specifications, said payment application (16) being set as default payment application in the payment instrument,
wherein the payment instrument comprises setting data (18) specifying that, by default, the credit transfer application is not selectable by the payment terminal,
wherein after the payment instrument is powered by the payment terminal and completes a boot sequence (S20) and before the full establishment of a communication session with the payment terminal, the payment instrument detects whether the sensor is triggered by the user (S22) or not,
wherein, only if the sensor turns out to be triggered, the payment instrument updates the setting data (18) to make the credit transfer application (17) selectable by the payment terminal as default payment application in the payment instrument (S24), otherwise the payment instrument leaves the setting data (18) unchanged (S26) and
wherein, the payment terminal selects the credit transfer application (17) in the payment instrument after full establishment of said communication session.

3. The method according to claim 1, wherein the credit transfer application (17) complies with SEPA Instant Credit Transfer requirements.

4. The method according to claim 1, wherein the hardware sensor is a push button, a capacitive button, a mechanical sensor, an optical sensor, an electrical sensor or a biometric sensor configured to detect a presence of a finger of the user.

5. The method according to claim 1, wherein the payment instrument is a smart card, a ring, a keychain, or a bracelet.

6. A payment instrument (10) assigned to a user (50) and able to manage a payment transaction with a payment terminal (20) allocated to a merchant,
wherein the payment instrument includes a hardware sensor (52) and a credit transfer application (17) comprising an internal key and a first reference of a first banking account assigned to the user,
wherein the credit transfer application (17) is configured to receive from the payment terminal a request command (70) to authorize a money transfer from the first banking account to a second banking account assigned to said merchant, said request command comprising a transfer amount and a second reference of the second banking account, and
wherein upon receipt of the request command (70), the payment instrument is configured to detect whether the sensor is activated by the user or not, and
wherein, only if the sensor turns out to be activated, the credit transfer application (17) is configured to compute a signature (60) using both the transfer amount, the internal key and said first and second references, and to send said signature to the payment terminal in response to the request command, otherwise the payment instrument is configured to refuse the payment transaction.

7. The payment instrument according to claim 6, wherein the payment instrument comprises a payment application (16) able to conduct a payment transaction by running a Payment System Environment (PSE) or Proximity Payment System Environment (PPSE) mechanism compliant with EMV^{®} specifications, said payment application (16) being set as default payment application in the payment instrument,
wherein the payment instrument comprises setting data (18) specifying that, by default, the credit transfer application is not selectable by the payment terminal,
wherein after the payment instrument is powered by the payment terminal and completes a boot sequence and before the full establishment of a communication session with the payment terminal, the payment instrument is configured to detect whether the sensor is activated by the user or not, and
wherein, only if the sensor turns out to be activated, the payment instrument is configured to update the setting data (18) to make the credit transfer application (17) selectable by the payment terminal as default payment application in the payment instrument, otherwise the payment instrument is configured to leave the setting data (18) unchanged.

8. The payment instrument according to claim 6, wherein the credit transfer application (17) complies with SEPA Instant Credit Transfer requirements.

9. The payment instrument according to claim 6, wherein the hardware sensor is a push button, a capacitive button, a mechanical sensor, an optical sensor, an electrical sensor or a biometric sensor configured to detect a presence of a finger of the user.

10. The payment instrument according to claim 6, wherein the payment instrument is a smart card, a ring, a keychain, or a bracelet.

11. A system (80) comprising the payment instrument according to claim 6 and a payment terminal comprising a point-of-sale application (23),
wherein the payment terminal is allocated to a merchant,
wherein the credit transfer application (17) comprises a first reference of a first banking account assigned to the user,
wherein the point-of-sale application is configured to send a select command to the payment instrument in order to select the credit transfer application (17) in the payment instrument after full establishment of a communication session between the payment terminal and the payment instrument,
wherein the point-of-sale application (23) is configured to send the request command (70) to authorize a money transfer from the first banking account to the second banking account assigned to said merchant and to get the signature (60) from the payment instrument in response to the request command, and
wherein the point-of-sale application (23) is configured to send a transfer request to a remote server (30) assigned to a bank with which the first banking account is opened, the transfer request comprising said signature.

12. The system according to claim 11, wherein both the credit transfer application (17) and the point-of-sale application (23) comply with SEPA Instant Credit Transfer requirements.
